# EUROPEAN PATENT APPLICATION

(11) **EP 4 831 267 A1**
(43) Date of publication of application: **28.10.2026**
(21) Application number: 26173859.5
(22) Date of filing: 22.04.2026
(51) Int. Cl.: C12C 7/14, C12C 5/02, C12C 7/28, C12H 1/044, C12H 1/07

(54) **USES OF A CONCENTRATED LIQUID TANNIC ACID SOLUTION IN BREWING PROCESS**

(30) Priority: 22.04.2025 BR 202025007894 U
(71) Applicant: Mendes De Oliveira, Jadyr, 05688-050 Sao Paulo - SP (BR)
(72) Inventor: Mendes de Oliveira, Jadyr, 05688-050 São Paulo (BR); Furtado Pinheiro, Leonardo, 01331-020 São Paulo (BR)
(74) Representative: Santi, Filippo

(57) **Abstract**

The present patent relates to new uses of a stable concentrated liquid tannic acid solution, such solution as described in document PCT/BR2023/050005, in particular during the beer production process with the aim of promoting better filterability, higher yield, shorter maturation time, and lower gluten concentration.

## Description

### Field of the Invention

The present invention relates to new uses of a stable concentrated liquid tannic acid solution, such solution as described in document PCT/BR2023/050005, in particular for application during the beer production process with the aim of promoting better filterability, higher yield, shorter maturation time, and lower gluten concentration.

### Description of the state of the art

The document PCT/BR2023/050005, hereby incorporated by reference, is owned by the applicant itself and describes a formulation of a concentrated liquid tannic acid solution for application in the colloidal stabilization and clarification of wort and/or beer in brewing.

The tannic acid solution in question acts in the physical (colloidal) stabilization of beer by promoting the precipitation of high molecular weight proteins. These proteins, when present in beer, are responsible for affecting its stability, causing haze throughout its *shelf life.*

Other technologies can be applied for this purpose, such as proteolytic enzymes, silica gel, and powdered tannic acid itself, which requires laborious preparation before its application in the beer production process. Generally, the dosage of powdered tannic acid, after conventional preparation, can be carried out in the steps of mashing, boiling, maturation, and/or directly during beer filtration, with this step being responsible for retaining the precipitated material.

The liquid tannic acid solution presented in document PCT/BR2023/050005 was developed as an alternative to powdered tannic acid, aiming for greater ease of handling and dosing during beer production. In addition to representing a stable, high-performance solution, the invention also offers greater application possibilities, as it can also be dosed into the cold wort before fermentation, a step that was previously not possible or reported with powdered tannic acid.

The greatest challenge to be overcome was the stabilization of the aforementioned tannic acid solution, which the inventors achieved through a solution comprising:
10% to 70% tannic acid powder (weight/weight);
1% to 55% cereal alcohol (weight/weight); and
1% to 55% water (weight/weight).

However, the inventors have discovered that applications of the aforementioned tannic acid solution go far beyond its initially proposed use, as will be detailed below.

### Objectives of the invention

The purpose of the present objection is to describe new uses of a stable concentrated tannic acid solution.

### Brief description of the invention

The objective of the present invention is achieved through the description of the uses of a tannic acid solution comprising:
10% to 70% tannic acid powder (weight/weight);
1% to 55% cereal alcohol (weight/weight); and
1% to 55% water (weight/weight),
in which said uses are for:
A. reducing the maturation time in the brewing process;
B. promoting better filterability and/or increasing the service life of filtration membranes and diatomaceous earth filters in the brewing process;
C. promoting higher yield per filtration cycle in the brewing production process; and/or
D. reducing the content of gluten in a beer, in which the tannic acid solution is applied during the beer preparation process.

### Brief description of the drawings

Figure 1 demonstrates the effect of "*geläger*" compaction during maturation by the action of the liquid tannic acid solution. Where: a) beer at the beginning of maturation without the addition of tannic acid solution - blank; b) beer at the beginning of maturation after the addition of tannic acid solution; c) beer in maturation 3 hours after the addition of tannic acid solution.
Figure 2 is a comparison of beer yield (hL) per diatomaceous earth filtration cycle comparing the application of the liquid tannic acid solution and proline-specific enzyme during wort cooling.
Figure 3 is a comparison of the filtration cycles required to obtain an approximate volume of 6,000 hL of beer after the application of the liquid tannic acid solution or proline-specific enzyme.
Figure 4 demonstrates the effect of applying the liquid tannic acid solution on the membrane pressure between beer filtration cycles.

### Detailed description of the invention

For definition purposes, beer is understood as the beverage resulting from the fermentation, by brewer's yeast, of wort made from malted barley or malt extract, previously subjected to a boiling process with the addition of hops or hop extract, in which case a portion of the malted barley or malt extract may be partially replaced by brewing adjuncts.

The beer production process comprises the following steps:
1. Grain grinding
2. Mashing
3. Clarification
4. Boiling
5. Whirlpool
6. Cooling (heat exchanger)
7. Fermentation
8. Maturation
9. Filtration
10. Lung Tank
11. Bottling

In a non-restrictive yet preferred manner, the dosage of the liquid tannic acid solution is carried out on line, by means of a pumping device with flow control, during the step of cooling and transfer of the wort to the cooling tank, when the wort is already in a cold wort state.

For definition purposes, cold wort is understood as the wort obtained after the sedimentation/separation process ("whirlpool") and cooling (through a heat exchanger), and before the start of fermentation.

Furthermore, unless expressly stated otherwise, or when a person skilled in the art is unequivocally capable of discerning, the concentrations expressed herein are on a weight basis relative to the total weight of the solution.

The solution referenced herein is prepared using a range of 1 to 55% cereal alcohol (weight by weight), preferably 5 to 52%, more preferably 15 to 50%, which enables the liquid formulation with ranges of 10 to 70% tannic acid concentration (weight by weight), preferably 15 to 63%, more preferably 25 to 55%.

In a preferred embodiment, the reference solution here comprises 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54 or 55% cereal alcohol (weight by weight), or any range comprised within these values.

In a preferred embodiment, the reference solution here comprises 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69 or 70% tannic acid (weight by weight), or any range comprised within these values.

In a preferred embodiment, the solution containing powdered tannic acid and cereal alcohol is diluted in water, in a range of 1 to 55% (weight by weight), preferably 5 to 52%, more preferably 15 to 50%, wherein the concentrations are expressed by weight based on the total weight of the solution.

.In a preferred embodiment, the solution 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54 or 55% water (weight by weight), or any range comprised within these values

The liquid tannic acid solution developed exhibited unexpected benefits that extended beyond its performance in ensuring the colloidal stability of beer. Surprisingly, the dosing of the tannic acid solution, especially when carried out in the cold wort, also provides significant benefits in the steps of maturation and filtration of the beer, as also allows the produced beer to have the gluten content reduced, in compliance with the regulatory criteria applicable for products considered gluten-reduced or gluten-free.

These additional benefits can be directly attributed to the application of the tannic acid-based solution in the cold wort, especially due to the continuous dosing of the product during the cooling process and transfer to the fermentation tank. In addition to the dosing point allowing the product to interact in advance with high molecular weight proteins, at this step, the lower temperature of the wort and the absence of active yeasts can reduce the interference of secondary biochemical processes, enabling tannic acid to act more selectively and efficiently.

In this way, without being limited to any particular explanation, it is believed that the protein complexes formed by means of this process tend to have a larger size and can be removed more efficiently by natural sedimentation or centrifugation, significantly reducing the material load in subsequent steps.

After fermentation, the beer is transferred to the maturation step, which is of great importance in the brewing process. At this stage, the beer is kept at reduced temperatures for periods that can range from days to months, depending on the type of beer produced, with the aim of promoting its sensory refinement. During maturation, beer clarification also occurs, resulting from the precipitation of high molecular weight proteins and yeast cells.

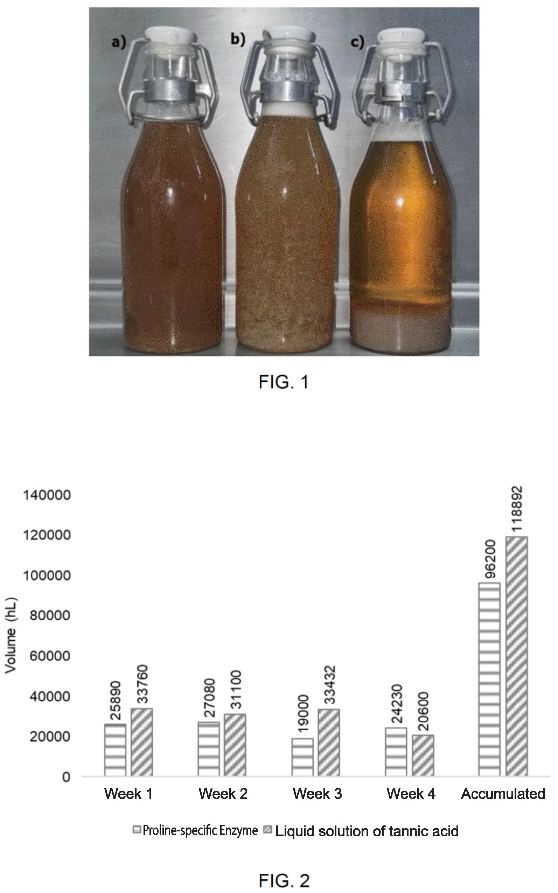

With the application of the tannic acid solution, preferably in the cold wort, the beer directed to the maturation step presents a significantly lower protein load compared to the traditional process. This factor enables the achievement of the desired colloidal and sensory characteristics in a reduced period, allowing the minimum required maturation time to be shortened to as little as 12 hours. Additionally, the volume of beer retained in the "ge*läger*" is considerably smaller, making it more compact and facilitating its removal (Figure 1).

The technical term "*geläger*" refers to the precipitated residue that accumulates at the end of the beer maturation step, consisting of proteins, polyphenols, tannins, and yeasts. This sedimented material can influence the clarification and colloidal stability of the beer, and is usually removed before the final steps of the brewing process.

Once the maturation period is completed, the beer undergoes the filtration step to remove suspended particles and to obtain a limpid and stable product, and may, in a non-limitative manner, previously undergo a centrifugation step. In the industrial context, this step may be carried out, in a non-limitative manner, by means of filtration with the assistance of particulate matter, such as diatomaceous earth, or by membrane filtration, and the selection of the system depends on the characteristics of the process, of the product profile and of the operating conditions adopted.

Filtration with diatomaceous earth is based on the formation of a porous filter medium, in which the solid particles are retained mechanically, yet resulting in the significant generation of solid residues (sludge), which requires additional steps of handling, disposal or treatment, impacting operational and environmental costs.

In turn, membrane filtration promotes separation by size exclusion, through semi-permeable barriers, dispensing with the use of solid accessories and, consequently, enabling a reduction in the generation of solid residues. However, said systems present greater operational complexity, including high acquisition and maintenance costs, as well as limitations relating to the useful life of the membranes, often compromised by phenomena of encrustation and pore clogging, which require routine cleaning procedures and possible replacement, and this may directly influence the overall cost of the process.

Applying the liquid tannic acid solution in the beer-making process, promoted significant benefits in the filtration step of both systems cited. In the filtration with diatomaceous earth, a higher yield of beer per filtration cycle was noted, in addition to a lesser generation of solid residues for disposal (sludge), enabling a more efficient and sustainable process. For the membrane filtration system, the benefits comprise a greater yield and lower operational pressure during the course of the filtration cycles.

With the application of the liquid tannic acid solution, the beer directed to the filtration step presents a significantly reduced protein load compared to the traditional process that employs other technologies for colloidal stabilization. This factor may justify the significant benefits observed in filtration, since the lower concentration of proteins not only reduces the saturation rate of the filter material, extending the service life of filtration membranes and diatomaceous earth filters, but also enables the achievement of a greater volume of beer per filtration cycle, directly impacting the yield of the production process.

Currently, the industry also uses the application of the proline-specific enzyme, which can equally be applied to the cold wort, with the intention of promoting colloidal stabilization. However, the use of proline is essentially limited to a stabilizing effect, not providing the same benefits noted with the dosing of the tannic acid solution described here. As widely recognized in the technical field, this enzyme acts on high molecular weight proteins rich in proline, promoting their hydrolysis and reducing their molecular size. This mechanism prevents such proteins from causing haze in the beer; however, they remain in suspension and their removal occurs gradually over the course of the maturation and filtration steps, differing from the effect obtained with the tannic acid solution.

The high performance already described and associated with the liquid tannic acid solution also showed surprising effects regarding the gluten content in the beer produced.

According to the "*Codex Alimentarius*", considered by MAPA for the regulation of gluten-free beers, the gluten content present for the beer to be considered gluten-free must be less than 20 ppm. Beers produced with conventional ingredients, such as barley malt, may present gluten concentrations over 80 ppm depending on the processing conditions, over that which would be considered safe for consumption.

As already stated, beer is traditionally produced from four basic ingredients, namely water, barley malt, hops and yeast. The barley malt is one of the core ingredients in the beer-making process, because besides providing fermentable sugars, they also supply proteins, nitrogen compounds, polyphenols and essential enzymes for the characteristics sensorial development of the beer.

Nevertheless, barley and wheat contain known protein fractions such as glutenins and gliadins, which together form gluten. The ingestion of these proteins poses a health risk to individuals suffering from celiac disease, who display sensitiveness or intolerance to gluten. Due to increased awareness and demand for inclusive food products, the beer-making industry has developed specific technologies for producing beers with reduced gluten content or entirely free of this protein.

In order to produce gluten-free beer, today, breweries can use two main technological approaches, namely by replacing the traditional malt for gluten-free raw materials and the enzymatic degradation of the gluten. Both options impact, oftentimes undesirably, the beer produced, representing the main challenge for this category of product.

Various grains that are naturally gluten-free can be used to replace the barley malt to produce beers, such as rice, corn, quinoa, sorghum, millet, amaranth and buckwheat. Although this approach assures the obtainment of a gluten-free beer, it also significantly influences the sensorial and physio-chemical characteristics of the beer produced, such as stability of the foam, body, viscosity of the wort, as well as differences in the aromatic and taste profiles in relation to conventional beers.

Breweries that wish to continue with more traditional production, using barley or wheat, can introduce a process that helps degrade or remove gluten. This process is generally carried out by applying enzymes that act to break down and reduce the size of the gluten protein so that it cannot be quantified by applicable analytical methods, generally immunological tests based on detecting the immunological epitopes of the gluten.

Although applying enzymes preserves a large part of the beer's sensorial characteristics, the safety of the product may vary in accordance with the consumer's sensitivity, since the gluten is not truly removed, but rather degraded into smaller fragments. Therefore, the use of this technology for making gluten-free beer requires a strict control to avoid variations in the efficiency of the hydrolysis and in cross-contamination.

Applying the liquid tannic acid solution, chiefly when allied to its recommended dosage point (cold wort), surprisingly, proved capable of lowering the gluten of the beer to values lower than the limit stipulated by legislation for beers classified as *gluten-free.* This effect may be attributed to the effectiveness of the tannic acid solution in also precipitating the gluten proteins during its action in the beer wort, enabling the removal of these proteins during the course of the maturation step.

The examples set out below refer to the performance comparisons between the liquid tannic acid solution and the proline-specific enzyme, both in terms of filtration efficiency and the yield of the process regarding lowering the gluten content of the beer. The results obtained demonstrate that the tannic acid-based product displays superior performance, especially in the increased beer yield per filtration cycle and in the capacity to promote a significant lowering of the gluten content. Such results prove the effectiveness of the solution proposed, confirming its industrial applicability and its technical benefits in the steps of maturation, filtration and obtainment of beers with reduced gluten content, as described throughout the present patent application.

### EXAMPLES

### EXAMPLE 1 - COMPARISON OF YIELD PER FILTRATION CYCLE

Beer samples were produced during a period of four weeks by means of a conventional stirring process, with different experiment conditions being evaluated. The experiment conditions included the addition of proline-specific enzyme or liquid tannic acid solution in the concentration. The proline-specific one was dosed at 2 g/hL, in accordance with the manufacturer's recommendations, whereas the liquid tannic acid solution was applied in an amount sufficient to reach a concentration of 2 g/hL tannic acid.

The filtration tests were conducted on an industrial scale, using a diatomaceous earth filtration system. During the assessed period, the yield per filtration cycle was monitored, as was the total volume of beer filtered in each experiment (Figure 2).

The evaluation of the results indicated that at the end of the assessed period, the total volume of filtered beer in an experimental capacity which included the application of the liquid tannic acid solution was 21,533 hL, equivalent to an 18% increase compared to the experiment included applying proline-specific enzyme in the process.

As for the diatomaceous earth filtration system, an average reduction of approximately 2.5 tons per month in sludge disposal was also noted in the experiment which included applying the liquid tannic acid solution, when compared to the one that included the proline-specific enzyme.

The results obtained demonstrate that the application of the liquid tannic acid solution contributes to improving the performance of the filtration process in systems that use diatomaceous earth. This performance is shown by the increase in the volume of filtered beer per cycle and by the reduced generation of solid residues during the course of the process.

### EXAMPLE 2 - BEER FILTERABILITY COMPARISON

Samples of beer were produced on an industrial scale from formulations containing barley malt, with different experimental conditions being prepared. The experimental conditions included the addition of proline-specific enzyme or liquid tannic acid solution in the concentration. The proline-specific one was dosed at 2 g/hL, in accordance with the manufacturer's recommendations, whereas the liquid tannic acid solution was applied in an amount sufficient to reach a concentration of 2 g/hL of tannic acid.

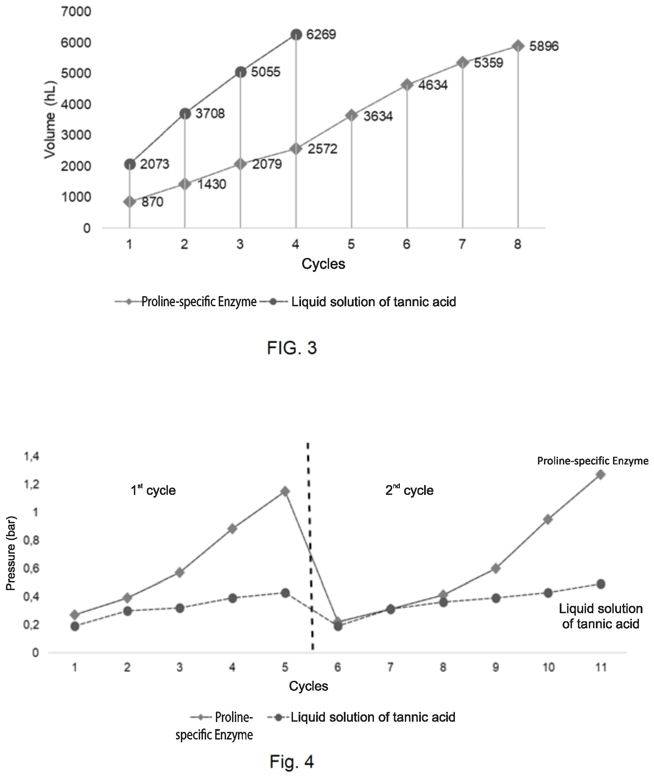

The samples obtained underwent a filtration process on an industrial scale using membrane filters. During the tests, the number of filtration cycles required to produce approximately 6,000 hL of beer in each experiment was evaluated. These results can be seen in Figure 3.

The evaluation of the filtration performance indicated that the formulation containing the liquid tannic acid solution made it possible to obtain a greater volume of beer per filtration cycle when compared to the formulation containing the proline-specific enzyme, resulting in a fewer number of cycles required to attain the production volume evaluated.

Furthermore, the pressure of the membranes was monitored throughout the filtration cycles, making it possible to note that in the formulation containing the liquid tannic acid solution, the pressure values between the cycles were lower than those seen in the formulation containing the proline-specific enzyme (Figure 4). This difference, as well as the impact associated to the filtration process, becomes even more obvious when establishing that between the cycles evaluated, a volume approximately 128% higher of filtered beer was obtained with the application of the tannic acid solution (Figure 3).

The results obtained prove that the use of liquid tannic acid solution contributes to improve the performance of the filtration process in beer, including the reduction in the number of filtration cycles and the decrease of the operational pressure of the membranes during the course of the process.

### EXAMPLE 3 - LOWERING GLUTEN CONTENT OF BEER

Samples of beer produced on an industrial scale from formulations containing barley malt, to which liquid tannic acid solution was added in an amount sufficient to reach a concentration of 2 g/hL of tannic acid, were evaluated for gluten content.

The samples obtained were analyzed for hydrolyzed gluten using an analytical kit based on immunological reagents capable of recognizing gluten-derived immunoreactive peptides. The method employed presents a detection limit of 0.25 ppm of gluten-derived peptide fragments, being adequate for analyzing fermented matrices in which the intact gluten is absent or extensively degraded.

The analysis of the samples indicated that the formulation containing the liquid tannic acid solution presented a gluten content lower than the detection limit of the method employed (<0.25 ppm), thus placing it at substantially lower levels than the limit established by legislation applicable for the beer to be considered gluten-free.

The results obtained indicate that the application of the liquid tannic acid solution is effective in reducing the gluten content in beer produced from barley malt, making it possible to obtain levels not detectable by the analytical method used. Accordingly, the solution described has proven to be appropriate in industrial processes designed to produce beers with reduced gluten content, including levels compatible with gluten-free claims, pursuant to applicable regulatory criteria.

**Table 1. Gluten content in beer samples produced with the dosage of tannic acid solution.**

| **Tests** | **Gluten content (ppm)** |
|---|---|
| Sample 1 | Nil* |
| Sample 2 | Nil* |
| Sample 3 | Nil* |

| | |
|---|---|
| *Nil = Amounts below detection limit (0.25 ppm) | |

## Claims

1. Use of a tannic acid solution comprising:
10% to 70% tannic acid powder (weight/weight);
1% to 55% cereal alcohol (weight/weight); and
1% to 55% water (weight/weight),
**characterized by** being for the reduction of the maturation time in the brewing process.

2. Use of a tannic acid solution comprising:
10% to 70% tannic acid powder (weight/weight);
1% to 55% cereal alcohol (weight/weight); and
1% to 55% water (weight/weight),
**characterized by** being for promoting better filterability and/or increasing the service life of filtration membranes and diatomaceous earth filters in the brewing process.

3. Use of a tannic acid solution comprising:
10% to 70% tannic acid powder (weight/weight);
1% to 55% cereal alcohol (weight/weight); and
1% to 55% water (weight/weight),
**characterized by** being intended to promote higher yield per filtration cycle in the brewing production process.

4. Use of a tannic acid solution comprising:
10% to 70% tannic acid powder (weight/weight);
1% to 55% cereal alcohol (weight/weight); and
1% to 55% water (weight/weight),
**characterized by** the fact that it is for reducing the content of gluten in a beer, in which the tannic acid solution is applied during the beer preparation process.

5. Tannic acid solution comprising:
10% to 70% tannic acid powder (weight/weight);
1% to 55% cereal alcohol (weight/weight); and
1% to 55% water (weight/weight),
**characterized by** being for use in reducing the maturation time of the brewing process.

6. Tannic acid solution comprising:
10% to 70% tannic acid powder (weight/weight);
1% to 55% cereal alcohol (weight/weight); and
1% to 55% water (weight/weight),
**characterized by** being for promoting better filterability and/or increasing the service life of filtration membranes and diatomaceous earth filters in the brewing process.

7. Tannic acid solution comprising:
10% to 70% tannic acid powder (weight/weight);
1% to 55% cereal alcohol (weight/weight); and
1% to 55% water (weight/weight),
**characterized by** being intended to promote greater yield per filtration cycle in the brewing production process.

8. Tannic acid solution comprising:
10% to 70% tannic acid powder (weight/weight);
1% to 55% cereal alcohol (weight/weight); and
1% to 55% water (weight/weight),
**characterized by** being for use in reducing the content of gluten in a beer, in which the tannic acid solution is applied during the beer preparation process.
